# DEMANDE DE BREVET EUROPEEN

(11) **EP 4 098 921 A1**
(43) Date de publication de la demande: **07.12.2022**
(21) Numéro de dépôt: 22173785.1
(22) Date de dépôt: 17.05.2022
(51) Int. Cl.: F16L 19/02

(54) **DISPOSITIF DE RACCORDEMENT ET APPAREIL COMPRENANT UN TEL DISPOSITIF**

(30) Priorité: 31.05.2021 FR 2105653
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: FENDLER, Yoan, 38360 SASSENAGE (FR); CARPENTIER, Simon, 38360 SASSENAGE (FR); MAZEAU, Alexandre, 38360 SASSENAGE (FR)
(74) Mandataire: Air Liquide

(57) **Abrégé**

Dispositif de raccordement d'un capillaire (2) de transport d'un fluide sous pression, notamment du xénon ou du krypton gazeux, à un circuit (3) de fluide transitant au travers d'un premier embout (4), le premier embout (4) comprenant une première portion conique au niveau de laquelle débouche le circuit (3), le capillaire (2) étant relié au circuit (3) du premier embout (4) via un second embout (5) comprenant un passage interne de fluide débouchant au niveau d'une seconde portion conique, une extrémité du capillaire (2) étant reliée de façon étanche à une extrémité du second embout (5), les première et seconde portions coniques des premier (4) et second (5) embouts étant de formes conjuguées pour assurer une liaison étanche entre les embouts (4, 5) par serrage de ces derniers, caractérisé en ce que le premier embout (4) est fixé à un raccord (7), le second embout (5) étant monté dans un écrou (6) vissé dans le raccord (7), le vissage de l'écrou (6) dans le raccord (7) assurant le serrage des première et seconde portions coniques.

## Description

L'invention concerne un dispositif de raccordement et un appareil comprenant un tel dispositif.

L'invention concerne plus particulièrement le dispositif de raccordement d'un capillaire de transport d'un fluide sous pression, notamment du xénon ou du krypton gazeux, à un circuit de fluide transitant au travers d'un premier embout, le premier embout comprenant une première portion conique au niveau de laquelle débouche le circuit, le capillaire étant relié au circuit du premier embout via un second embout comprenant un passage interne de fluide débouchant au niveau d'une seconde portion conique, une extrémité du capillaire étant reliée de façon étanche à une extrémité du second embout, les première et seconde portions coniques des premier et second embouts étant de formes conjuguées pour assurer une liaison étanche entre les embouts par serrage de ces derniers.

L'invention concerne en particulier un dispositif de liaison fluidique d'un capillaire (tuyau de type « 1/32 » par exemple) à un raccord à embout conique sans contraindre en torsion le capillaire. L'embout est par exemple du type à filetage « 5/16 24 unjf-3A»".

Ce type de raccord peut être soumis à de haute pression, par exemple de l'ordre de 300bar et doit donc être parfaitement étanche (par exemple fuite <10⁻⁶mbar.l/s).

Les raccords existants pour hautes pressions s'adaptant au raccord de type « 5/16 » sont généralement lourds et encombrants et ne permettent simplement pas de passer d'un raccord de type « 5/16 » à un capillaire de type « 1/32 ».

Une solution utilise un empilement de raccords de différents types. Cette solution est encombrante, massive et ne permet pas de garantir l'étanchéité. Une brasure n'est pas envisageable en raison de la forte température induite par celle-ci qui est susceptible de détériorer l'équipement sur lequel se trouve le raccord « 5/16 ».

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le premier embout est fixé à un raccord, le second embout étant monté dans un écrou vissé dans le raccord, le vissage de l'écrou dans le raccord assurant le serrage des première et seconde portions coniques.

Par ailleurs, des modes de réalisation de l'invention peuvent comporter l'une ou plusieurs des caractéristiques suivantes :
- le vissage de l'écrou dans le raccord assure une poussée du second embout contre le premier embout via un système de butée entre l'écrou et le second embout,
- l'écrou est fileté et vissé dans un premier taraudage du raccord,
- le premier embout est fileté et vissé dans un second taraudage du raccord,
- les premier et second taraudages ont des axes parallèles et ont des sens de filetage inversés,
- l'extrémité du capillaire reliée de façon étanche à une extrémité du second embout est reçue dans un logement en forme de manchon et est soudée ou brasée dans et/ou sur ce dernier,
- les première et seconde portions coniques des embouts sont respectivement de type mâle et femelle.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
Fig. 1 représente une vue en coupe, schématique et partielle, illustrant un exemple de réalisation d'un dispositif de raccordement selon l'invention,
Fig. 2 représente une vue schématique et partielle illustrant un exemple d'appareil utilisant un tel dispositif.

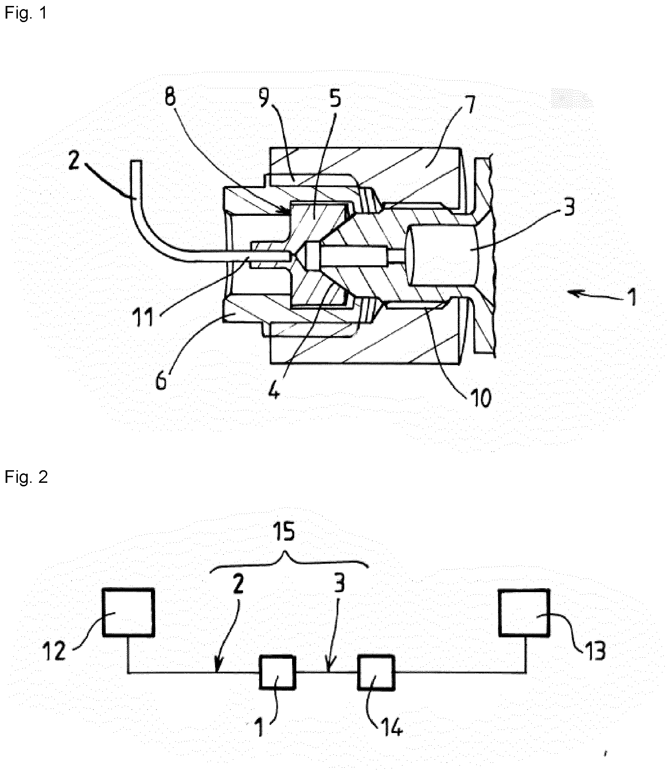

Le dispositif 1 de raccordement fluidique illustré à la Fig. 1 assure la liaison fluidique entre un capillaire 2 de transport d'un fluide et un circuit 3 de fluide transitant au travers d'un premier embout 4. Comme illustré, le premier embout 4 peut comporter un ensemble l'alésage(s) formant un canal de circulation de fluide.

Le premier embout 4 comprenant une première portion conique, par exemple mâle (c'est-à-dire convexe), au niveau de laquelle débouche une extrémité du circuit 3.

Le capillaire 2 est relié de façon étanche à ce circuit 3 du premier embout 4 via un second embout 5 comprenant également un passage interne de fluide (ensemble canaux et alésage(s) par exemple). Ce passage interne au travers du second embout 5 débouchant au niveau d'une seconde portion conique (par exemple de type femelle, c'est-à-dire concave).

Une extrémité du capillaire 2 est reliée de façon rigide et étanche à une extrémité du second embout 5. Par exemple, l'extrémité du capillaire 2 est reçue dans un logement en forme de manchon 11 tubulaire du second embout 5 et est soudée ou brasée dans et/ou sur ce dernier.

Les première et seconde portions coniques des premier 4 et second 5 embouts sont de formes conjuguées pour assurer une liaison étanche entre les embouts 4, 5 par emboitement et serrage de ces derniers.

Le premier embout 4 est fixé à un raccord 7 formant son support. Le second embout 5 est monté dans un logement interne d'un écrou 6 qui est vissé dans le raccord 7. Le vissage de l'écrou 6 dans (contre) le raccord 7 assure le serrage des première et seconde portions coniques.

Le vissage de l'écrou 6 dans le raccord 7 assure une poussée du second embout 5 contre le premier embout 4 (bloqué en position dans son raccord 7) par exemple via un système de butée 8 entre l'écrou 6 et le second embout 5. Par exemple, le corps (un flanc) du second embout 5 peut venir en butée contre un épaulement formé dans le corps de l'écrou 6.

Ceci permet de venir plaquer la portion conique femelle du second embout 5 sur la portion conique mâle du premier embout 4.

L'écrou 6 comporte par exemple une forme générale cylindrique filetée qui est vissés dans un premier taraudage 9 cylindrique du raccord 7.

De même, le premier embout 4 peut comporter une portion cylindrique filetée et vissée dans un second taraudage 10 formé dans le raccord 7.

Avantageusement, les premier 9 et second 10 taraudages ont des axes parallèles et ont des sens de filetage inversés. Ceci permet de venir serrer l'ensemble sans contraindre en torsion le capillaire. Ceci permet en effet de visser d'un côté du dispositif sans mettre de contrainte sur l'autre côté ou sur le capillaire 2.

L'ensemble peut être assemblé par exemple comme suit :
insertion du capillaire 2 dans l'écrou 6
brasage ou soudage du capillaire sur le second embout 5,
montage (vissage) du raccord 7 à double taraudage 9, 10 avec le premier embout 4,
insertion de l'écrou 6 avec le second embout 5 dans le raccord 7,
serrage/vissage des deux entités pour réaliser une liaison étanche.

Le dispositif 1 est ainsi compact, de masse réduite et ne génère pas de contraintes sur le capillaire 2 lors du serrage. Le dispositif 1 peut s'appliquer dans des circuits de gaz à haute pression pour lequel le capillaire 2 est relié à un équipement d'un circuit fluidique (par exemple jusqu'à 300 ou 450 bar).

Le dispositif 1 peut s'appliquer à tout type de raccordement, notamment pour tout raccordement à réaliser avec un encombrement restreint et en particulier pour relier deux parties fluidiques ayant une grosse différence de dimension (par exemple respectivement 5/16 et 1/32) et où l'on ne souhaite pas empiler les réducteurs/adaptateurs.

D'autres modifications sont possibles. Par exemple, l'écrou 6 pourrait avoir une ouverture dimensionnée pour permettre le passage de l'équipement qui est relié au capillaire 2.

La Fig. 2 schématise de façon simplifiée un exemple d'appareil de transfert de fluide, notamment de gaz sous pression entre une source 12 de gaz sous pression (réservoir par exemple) et un appareil 13 récepteur. Cet appareil comprend un circuit 15 de transfert de gaz muni d'un régulateur 14 de débit notamment une vanne, un capillaire 2 et un dispositif 1 de raccordement conforme à la description ci-dessus.

## Revendications

1. Dispositif de raccordement d'un capillaire (2) de transport d'un fluide sous pression, notamment du xénon ou du krypton gazeux, à un circuit (3) de fluide transitant au travers d'un premier embout (4), le dispositif comprenant le capillaire (2), le premier embout (4) comprenant une première portion conique au niveau de laquelle débouche le circuit (3), le capillaire (2) étant relié au circuit (3) du premier embout (4) via un second embout (5) comprenant un passage interne de fluide débouchant au niveau d'une seconde portion conique, une extrémité du capillaire (2) étant reliée de façon étanche à une extrémité du second embout (5), les première et seconde portions coniques des premier (4) et second (5) embouts étant de formes conjuguées pour assurer une liaison étanche entre les embouts (4, 5) par serrage de ces derniers, **caractérisé en ce que** le premier embout (4) est fixé à un raccord (7), le second embout (5) étant monté dans un écrou (6) vissé dans le raccord (7), le vissage de l'écrou (6) dans le raccord (7) assurant le serrage des première et seconde portions coniques.

2. Dispositif selon la revendication 1, **caractérisé en ce que** le vissage de l'écrou (6) dans le raccord (7) assure une poussée du second embout (5) contre le premier embout (4) via un système de butée (8) entre l'écrou (6) et le second embout (5).

3. Dispositif selon la revendication 1 ou 2, **caractérisé en ce que** l'écrou (6) est fileté et vissé dans un premier taraudage (9) du raccord (7).

4. Dispositif selon l'une quelconque des revendications 1 à 3, **caractérisé en ce que** le premier embout (4) est fileté et vissé dans un second taraudage (10) du raccord (7).

5. Dispositif selon les revendications 3 et 4, **caractérisé en ce que** les premier (9) et second (10) taraudages ont des axes parallèles et ont des sens de filetage inversés.

6. Dispositif selon l'une quelconque des revendications 1 à 5, **caractérisé en ce que** l'extrémité du capillaire (2) reliée de façon étanche à une extrémité du second embout (5) est reçue dans un logement en forme de manchon (11) et est soudée ou brasée dans et/ou sur ce dernier.

7. Dispositif selon l'une quelconque des revendications 1 à 6, **caractérisé en ce que** les première et seconde portions coniques des embouts (4, 5) sont respectivement de type mâle et femelle.

8. Appareil de transfert de fluide, notamment de gaz sous pression entre une source (12) de gaz sous pression et un appareil (13) récepteur, comprenant un circuit (15) de transfert de gaz comprenant un régulateur (14) de débit notamment une vanne, un capillaire (2) et un dispositif (1) de raccordement conforme à l'une quelconque des revendications 1 à 7.
